# EUROPÄISCHE PATENTANMELDUNG

(11) **EP 3 855 043 A1**
(43) Veröffentlichungstag der Anmeldung: **28.07.2021**
(21) Anmeldenummer: 20208379.6
(22) Anmeldetag: 18.11.2020
(51) Int. Cl.: F16F 13/06, F16F 3/087, F16F 1/44, F16F 9/16, B61G 9/06, B61G 9/08, B61G 3/16

(54) **ZUG- UND STOSSVORRICHTUNG INSBESONDERE FÜR EINE KUPPLUNG EINES SCHIENENFAHRZEUGS**

(30) Priorität: 22.01.2020 CH 692020
(71) Anmelder: Faiveley Transport Schwab AG, 8207 Schaffhausen (CH)
(72) Erfinder: FAAS, Stefan, 9050 Appenzell (CH); PLECKO, Marijan, 8200 Schaffhausen (CH)
(74) Vertreter: Luchs, Willi

(57) **Zusammenfassung**

Eine Zug- und Stossvorrichtung (10) insbesondere für eine Kupplung eines Schienenfahrzeugs ist mit einer Zugstange (12) mit einem endseitigen Verbindungsteil (13), an dem ein Kupplungskopf (30) der dergleichen befestigbar ist, und mit einem mit dem Schienenfahrzeug verbindbaren Abstützelement (15) versehen. Es sind Federelemente (17, 18) beidseitig des Abstützelementes (15) für das Dämpfen der entstehenden Zug- bzw. Druckkräfte vorgesehen und als zusätzliches Mittel für die Dämpfung ist eine Dämpfungseinrichtung (20) mit einer Kolben- /Zylindereinheit in der Zugstange (12) aufgenommen. Damit kann die Dämpfung bei ruckartig auf die jeweilige Kupplung wirkenden Stoss- oder Zugkräften sanfter und auch wirksamer aufgrund des grösseren Gesamthubs dieser Dämpfungseinrichtung erfolgen.

## Beschreibung

Die Erfindung betrifft eine Zug- und Stossvorrichtung insbesondere für eine Kupplung eines Schienenfahrzeugs nach dem Oberbegriff des Anspruchs 1.

Eine bekannte Zug- und Stossvorrichtung gemäss der Schweizer Patentanmeldung Nr. 1147/19 besteht aus einer mit dem Kupplungskopf oder dergleichen verbindbaren Zugstange, mehreren aneinandergereihten Federelementen als Mittel für die Dämpfung der entstehenden Druck- bzw. Zugkräfte sowie aus einer am Schienenfahrzeug befestigbaren Abstützung. Es sind dabei vor und hinter der Abstützung je eine bestimmte Anzahl solcher Federelemente als jeweilige Federpakete aneinandergereiht. Mit diesen üblicherweise aus Kunststoff hergestellten ring- oder andersförmigen Federelementen können ruckartige Stosskräfte in Zug- bzw. Druckrichtung gegen die Abstützung in einem gewissen Grad gedämpft werden. Diese Dämpfung ist aber beschränkt wirkend, weil diese Federelemente nur um einen geringen Hub zusammengedrückt werden können. Der mögliche Gesamthub aus der gewählten Anzahl der Federelemente summiert sich zwar aus ihren Einzelhüben, aber mit diesen sind einer maximal möglichen Dämpfung dennoch Grenzen gesetzt.

Der Erfindung liegt demgegenüber die Aufgabe zugrunde, eine Zug- und Stossvorrichtung nach der eingangs erwähnten Gattung zu schaffen, mittels der bei einer kompakten Ausbildung verbesserte Verhältnisse in Bezug auf die Absorption von Druckkräften zumindest in Druckrichtung gegen das Abstützelement hin erzielt werden und damit die Dämpfung in der jeweiligen Kupplung sanfter erfolgt.

Diese Aufgabe ist erfindungsgemäss durch die Merkmale des Anspruchs 1 gelöst.

Mit dieser anstelle der oder zusätzlich zu den vorgesehenen Federelementen in der Zugstange aufgenommenen Dämpfungseinrichtung mit einer Kolben-/Zylindereinheit als Dämpfungsmittel vor und/oder hinter dem Abstützelement wird erreicht, dass damit die Dämpfung in der jeweiligen Kupplung insbesondere bei ruckartig auf die jeweilige Kupplung wirkenden Stoss- oder Zugkräften sanfter und auch wirksamer aufgrund des grösseren Gesamthubs dieser Dämpfungseinrichtung erfolgt.

Bei einer sehr vorteilhaften Ausführung weist die Kolben-/Zylindereinheit der Dämpfungseinrichtung ein an der Zugstange bei dem Abstützelement befestigtes Zylindergehäuse und eine in diesem begrenzt verschiebbare Kolbenstange mit einem Kolben auf. Damit kann eine sehr stabile und dauerhaft sichere Ausbildung der Zugstangen-Einheit mit einer verbesserten Dämpfung erzielt werden.

Im Rahmen der Erfindung kann auf der Seite der Dämpfungseinrichtung für die Auslenkung der Zugstange eine kugelkalottenförmige oder ähnliche Ausbildung einer Stirnfläche bei dem einen Federelement vorgesehen sein, weiches mit dem Abstützelement in Berührung steht.

Zweckmässigerweise ist in der Kolben-/Zylindereinheit der Dämpfungseinrichtung ein Gas- und separat ein Hydraulikmedium enthalten, die funktionell zusammenwirkend sind und eine gas-hydraulische Steuerung der Verschiebung des einen im andern Zylinder insbesondere bei einer auftretenden Stosskraft vom Kupplungskopf ermöglichen.

Die Erfindung sowie weitere Vorteile derselben sind nachfolgend anhand von Ausführungsbeispielen unter Bezugnahme auf die Zeichnung näher erläutert. Es zeigt:
- Fig. 1: eine perspektivische Ansicht der erfindungsgemässen Zug- und Stossvorrichtung mit einem an dieser befestigten Kupplungskopf, und
- Fig. 2: eine Draufsicht der Zug- und Stossvorrichtung mit dem Kupplungskopf nach Fig. 1.

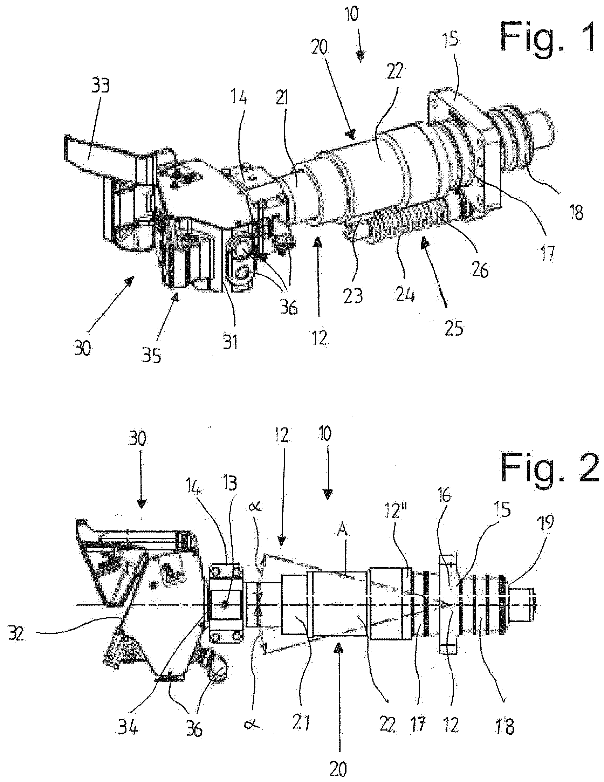

Fig. 1 und Fig. 2 zeigen eine Zug- und Stossvorrichtung 10 mit einem an dieser befestigten Kupplungskopf 30, der mit einem solchen eines andern Schienenfahrzeugs oder ähnlichem koppelbar ist, was nicht näher veranschaulicht ist. Anstelle dieses gezeigten Kupplungskopfs könnte auch irgend ein anders ausgebildeter bekannter Kupplungskopf, ein einfacheres bekanntes Kopfelement oder ähnliches montiert sein, oder es könnte eine direkte Verbindung mit einer Zug- und Stossvorrichtung eines zu koppelnden Fahrzeugs vorgesehen sein.

Diese Zug- und Stossvorrichtung 10 eignet sich für Güter-, Personen- oder Wagen für andere Zwecke. Sie ist mit einer Zugstange 12 mit einem endseitigen Verbindungsteil 13 versehen, an dem der Kupplungskopf 30 mittels Klemmbacken 14 befestigbar ist. Ein mit dem Schienenfahrzeug verbindbares Abstützelement 15 ist am andern Ende der Zugstange 12 angeordnet. Es ist in diesem ein angedeutetes Drehgelenk 16 mit einem kugeligen Lager enthalten, um welches die Zugstange 12 in jeder Richtung um 360° um einen maximalen Winkel α auslenkbar ist, d.h. sowohl nach oben bzw. nach unten als auch seitlich um diesen Winkel α.

Erfindungsgemäss ist zwischen dem Verbindungsteil 13 vorne bei der Zugstange 12 und dem Abstützelement 15 eine Dämpfungseinrichtung 20 als Mittel für die Dämpfung angeordnet, welche eine verstellbare Kolben-/Zylindereinheit umfasst.

Sehr vorteilhaft weist diese Dämpfungseinrichtung 20 ein an der Zugstange 12 beim Abstützelement 15 befestigtes Zylindergehäuse 22 und eine in diesem begrenzt verschiebbare Kolbenstange 21 mit einem nicht sichtbaren Kolben auf, wobei diese Kolbenstange 21 beim Verbindungsteil 13 anschliesst und zylinderartig ausgebildet ist. Das Zylindergehäuse 22 seinerseits ist an einem Flansch 12" der Zugstange 12' befestigt und sein Aussenmantel ist mit abgestuften Durchmessern versehen, um sein Gewicht zu reduzieren. Es könnte aber selbstverständlich durchgehend mit dem gleichen Durchmesser bemessen sein.

In der Kolben-/Zylindereinheit der Dämpfungseinrichtung 20 ist vorzugsweise ein Gas- und separat ein Hydraulikmedium enthalten, die funktionell zusammenwirkend sind. Es ist dabei eine gas-hydraulische Steuerung in dieser Dämpfungseinrichtung 20 für eine gesteuerte Verschiebung der Kolbenstange 21 im Zylindergehäuse 22 insbesondere bei einer auftretenden Stosskraft vom Kupplungskopf 30 integriert.

Bei normalem Fahrbetrieb in gekuppeltem Zustand, bei dem eine Zugkraft in der Zug- und Stossvorrichtung 10 wirkt, ist die Kolbenstange 21 bis zu einem Anschlag im Zylindergehäuse ausgefahren, währenddem sie beispielsweise bei einem schnellen Bremsen einer Zugkomposition in das Zylindergehäuse 22 gedrückt und damit diese sanfte Dämpfung bewirkt wird.

Eine solche gas-hydraulische Steuerung der Verschiebung des einen zum andern Zylinder ist an sich bekannt. Es wird diesbezüglich auf die Druckschrift EP-A-1 616 771 verwiesen, bei der eine solche Steuerung zu einem Puffer eines Schienenfahrzeugs offenbart ist.

Die in dem Drehgelenk 16 im Abstützelement 15 gelagerte Zugstange 12' und dieses koaxial zu ihr angeordnete Zylindergehäuse 22 mit der Kolbenstange 21 und damit auch der an der Zugstange befestigte Kupplungskopf 30 sind bis zu diesem maximalen Winkel α gemeinsam in einer Achse A auslenkbar.

Es sind als federnde Mittel für das Dämpfen der beim Kuppeln oder im Fahrbetrieb der Schienenfahrzeuge entstehenden Zug- und/oder Drucckräfte vorzugsweise mehrere vor und hinter dem Abstützelement 15 angeordnete Federelemente 17, 18 aneinandergereiht. Zwischen dem das Zylindergehäuse 22 haltenden Flansch 12" der Zugstange 12' und dem Abstützelement 15 sind zum Beispiel zwei Federelemente 17 zum Dämpfen der Druckkräfte und rückseitig des Abstützelementes 15 drei Federelemente 3", die bei Zugkräften wirksam sind, veranschaulicht. Es könnten aber je nach Bedarf beliebig andere Anzahlen gewählt werden. Diese Federelemente 17, 18 sind üblicherweise aus einem federnd zusammendrückbaren Kunststoff gefertigt.

Beim hinteren Ende der Zugstange 12' ist ein Anschlagmittel 19 für die Federelemente 18 befestigt, welches vorzugsweise eine auf der Zugstange endseitig aufschraubbare Mutter mit einem Sicherungselement und einen losen Druckteller aufweist, durch die ein Vorspannen der Federelemente 18 mit einer definierten Presskraft gegen das Abstützelement 15 ermöglicht wird.

Beim einen Federelement 17 neben dem Abstützelement 15 auf der Seite der Dämpfungseinrichtung 20 kann eine kugelkalottenförmige Ausbildung zumindest der einen Stirnfläche angeordnet sein, welche mit dem Abstützelement 15 in Berührung steht und die Zugstange damit gegenüber dem am Schienenfahrzeug befestigten Abstützelement leicht auslenken kann. Dies könnte auch beim einen Federelement 18 rückseitig beim Abstützelement 15 gleichsam vorgesehen sein. Anstelle von Federelementen könnten auch ein Flansch oder ähnliches verwendet werden.

Zum Halten der Zugstange 12 in einer vorgegebenen Position und Rückführen derselben in diese relativ zum Fahrzeug zentrierte Ausgangslage ist ein vorzugsweise parallel zur Zugstange 12 ausgerichteter Verbindungsarm 25 vorgesehen, welcher an dem einen Ende an einem wegragenden Teil 23 des Zylinders 22 befestigt und am anderen Ende im Abstützelement 15 schwenkbar gelagert ist.

Ein solcher Verbindungsarm 25 ist in der eingangs gewürdigten Schweizer Patentanmeldung Nr. 1147/19 im Detail dargetan und ist daher nachfolgend nicht mehr in allen Einzelheiten erläutert. Er weist eine Führungsstange 26 und eine diese umgebende Druckfeder 24 auf, wobei diese Führungsstange 26 an dem einen Ende am wegragenden Teil 23 befestigt und am anderen Ende beim Abstützelement 15 axial verschiebbar und schwenkbar gelagert ist. Die diese Führungsstange 26 umgebende Druckfeder 24 ist einerseits am Abstützelement und andererseits bei diesem Teil 23 für die Erzeugung dieser stützenden Druckkraft abgestützt.

Anstelle dieses Verbindungsarms 25 könnte auch eine unabhängig von der Vorrichtung 10 angeordnete Stützvorrichtung oder als einfache Ausführung keine diesbezügliche Abstützung vorgesehen sein.

Der an dem Verbindungsteil 13 mittels Klemmbacken 14 befestigte Kupplungskopf 30 umfasst ein Gehäuse 31 mit einer vorderseitigen Stossfläche 32 für eine flächige Auflage mit einer ebensolchen eines zu kuppelnden Kupplungskopfs und rückseitig mit einem Anschlussflansch 34 für die Befestigung an der Zugstange 12. Im Gehäuse 31 ist unter anderem ein an sich bekannter Kupplungs- und Verriegelungsmechanismus 35 integriert. Zudem ist eine Leitschaufel 33 oberhalb des Gehäuses 31 seitlich in einem vorgegebenen Winkel zur Stossfläche 32 vorstehend angeordnet, um beim Kuppeln mit einer Leitschaufel des zu kuppelnden Kupplungskopfs derart zusammenzuwirken, dass die Kupplungsköpfe zueinander in Richtung der Kupplungsposition führbar sind. Ferner sind noch Anschlüsse 26 für eine Hauptluftleitung und anderen Medien vorgesehen.

Die Erfindung ist mit den obigen Ausführungsbeispielen ausreichend dargetan. Sie könnte aber noch durch weitere alternative Varianten erläutert sein.

Eine solche Dämpfungseinrichtung könnte im Prinzip auch hinter dem Abstützelement oder beidseitig zu diesem mit je einer in der Zugstange aufgenommen sein. Bei der Anwendung hinter dem Abstützelement müssten die Zylinder dann umgekehrt angeordnet sein.

Diese Kolben-/Zylindereinheit der Dämpfungseinrichtung könnte auch anders als mit einer gas-hydraulischen Steuerung ausgebildet sein, zum Beispiel dass sie nur mit wenigstens einem Gas- oder Hydraulikmedium funktioniert.

## Patentansprüche

1. Zug- und Stossvorrichtung insbesondere für eine Kupplung eines Schienenfahrzeugs, mit einer Zugstange (12) mit einem endseitigen Verbindungsteil (13), an dem ein Kupplungskopf (30) der dergleichen befestigbar ist, einem mit dem Schienenfahrzeug verbindbaren Abstützelement (15) der Zugstange (12) sowie mit Federelementen (17, 18) beidseitig des Abstützelementes (15) für das Dämpfen der entstehenden Zug- bzw. Druckkräfte, **dadurch gekennzeichnet, dass**
eine Dämpfungseinrichtung (20) mit einer Kolben-/Zylindereinheit in der Zugstange (12) als zusätzliches Mittel für die Dämpfung aufgenommen ist.

2. Zug- und Stossvorrichtung nach Anspruch 1, **dadurch gekennzeichnet, dass**
auf der Seite der Dämpfungseinrichtung (20) für die Auslenkung der Zugstange (12) eine kugelkalottenförmige oder ähnliche Ausbildung einer Stirnfläche bei dem einen Federelement (17) vorgesehen ist, welches mit dem Abstützelement (15) in Berührung steht.

3. Zug- und Stossvorrichtung nach Anspruch 1 oder 2, **dadurch gekennzeichnet, dass**
die Kolben-/Zylindereinheit der Dämpfungseinrichtung (20) ein Zylindergehäuse (22) und eine in diesem begrenzt verschiebbare Kolbenstange (21) mit einem Kolben aufweist, wobei das Zylindergehäuse (22) an einem Flansch (12") der Zugstange (12') befestigt ist, währenddem diese Kolbenstange (21) beim Verbindungsteil (13) anschliesst.

4. Zug- und Stossvorrichtung nach Anspruch 3, **dadurch gekennzeichnet, dass**
die in einem Drehgelenk (16) im Abstützelement (15) gelagerte Zugstange (12') zusammen mit dem Zylindergehäuse (22) und der Kolbenstange (21) der Dämpfungseinrichtung (20) entlang einer Achse (A) auslenkbar sind.

5. Zug- und Stossvorrichtung nach Anspruch 3 oder 4, **dadurch gekennzeichnet, dass**
in der Kolben-/Zylindereinheit der Dämpfungseinrichtung (20) ein Gas- und separat ein Hydraulikmedium enthalten ist, die funktionell zusammenwirkend sind, durch die eine gas-hydraulische Steuerung der Verschiebung der Kolbenstange (21) im Zylindergehäuse (22) insbesondere bei einer auftretenden Stosskraft vom Kupplungskopf (30) her ermöglicht wird.

6. Zug- und Stossvorrichtung nach einem der Ansprüche 1 bis 5, **dadurch gekennzeichnet, dass**
zwischen dem Abstützelement (15) und endseitig der Zugstange (12) mehrere auf der Zugstange (12) gereihte Federelemente (18) angeordnet sind.

7. Zug- und Stossvorrichtung nach einem der Ansprüche 1 bis 6, **dadurch gekennzeichnet, dass**
das Zylindergehäuse (22) beim Abstützelement (15) an einem Flansch (12") der Zugstange (12) befestigt ist, wobei zwischen diesem Flansch (12") und dem Abstützelement (15) vorzugsweise mehrere Federelemente (17) aneinandergereiht sind.

8. Zug- und Stossvorrichtung nach einem der Ansprüche 1 bis 7, **dadurch gekennzeichnet, dass**
ein vorzugsweise parallel zu der Zugstange (12) ausgerichteter Verbindungsarm (25) angeordnet ist, der bei dem Abstützelement (15) einerseits und beim Zylinder (22) andererseits gehalten ist und dabei bewirkt, dass eine stützende Druckkraft auf die Zugstange (2) erzeugt und damit zumindest eine bestimmte zentrierende Höhenposition derselben bewirkt wird.
